# EUROPÄISCHE PATENTANMELDUNG

(11) **EP 1 329 346 A1**
(43) Veröffentlichungstag der Anmeldung: **23.07.2003**
(21) Anmeldenummer: 02016142.8
(22) Anmeldetag: 20.07.2002
(51) Int. Cl.: B60H 1/34

(54) **Luftausströmer**

(30) Priorität: 16.01.2002 DE 20200603 U
(71) Anmelder: KENDRION RSL GmbH & Co.KG, 57368 Lennestadt (DE)
(72) Erfinder: Schäfer, Dieter, 61267 Neu Anspach (DE)
(74) Vertreter: Köchling, Conrad, Dipl.-Ing.

(57) **Zusammenfassung**

Um bei einem Luftausströmer für die Belüftung des Innenraums eines Kraftfahrzeuges mit einem von einem Gehäuse umschlossenen Luftkanal, an dessen Luftaustrittsende ein Verschluss in dem Gehäuse durch einen Verstellmechanismus verschwenkbar angeordnet ist, sowie mit einem Rahmen, der im Gehäuse am Luftaustrittsende gehalten ist und in welchem verstellbare Lamellen befestigt sind, die der Zuluft in den Innenraum eine gewünschte Vorzugsrichtung aufprägen, bei dessen Nichtbenutzung einen Abschluss zu schaffen, der sich harmonisch in die Gestaltung des Armaturenbrettes einfügt, wird vorgeschlagen, dass der Verschluss eine Abschlussplatte (20;88) ist, welche zwischen einer die Zugluftströmung in den Innenraum freigebenden Offenstellung und einer Geschlossenstellung verschwenkbar ist, in welcher eine Zuluftaustrittsöffnung des Rahmens (10;60) mit einer Außenblende (40) bündig abgeschlossen ist.

## Beschreibung

Die Erfindung betrifft einen Luftausströmer für die Belüftung des Innenraumes eines Kraftfahrzeuges mit einem von einem Gehäuse umschlossenen Luftkanal, an dessen Luftaustrittsende ein Verschluß in dem Gehäuse durch einen Verstellmechanismus verschwenkbar angeordnet ist, sowie mit einem Rahmen, der im Gehäuse am Luftaustrittsende gehalten ist und in welchem verstellbare Lamellen befestigt sind, die der Zuluft in den Innenraum eine gewünschte Vorzugsrichtung aufprägen.

Der Insasse eines Kraftfahrzeugs, insbesondere eines Pkws, möchte dem Innenraum oder der Fahrgastzelle des Kraftfahrzeugs Luft in fein dosierter Menge und Richtung zuführen können. Dazu ist in einem Luftkanal, aus welchem von einem Gebläse angelieferte Luft in den Innenraum austreten kann, eine Schließklappe angeordnet, deren Stellung relativ zum Luftkanal die in den Innenraum' ausgelassene Luftmenge steuert. Ferner sind nacheinander in Luftströmungsrichtung hinter der Schließklappe Vertikallamellen, die den Luftaustritt nach links oder rechts lenken, sowie Horizontallamellen angeordnet, welche den austretenden Luftstrom nach oben oder unten richten. Der auf diese Luftausströmer gerichtete Blick des oder der Fahrzeuginsassen geht durch den notwendigen Abstand der einzelnen Lamellenblätter der Horizontal- oder Vertikallamellen in den Luftkanal hinein und damit in das funktionale Innere des Luftausstömers vor allem auch dann, wenn keine Zuluft für den Innenraum gewünscht ist. Im Verhältnis zu dem sonst meist ansprechenden Design des Armaturenbrettes, in welches der Luftausströmer eingebaut ist, ist der Blick in den Luftausströmer für viele Fahrzeuginsassen unschön.

Der Erfindung liegt daher die Aufgabe zugrunde, bei dem eingangs genannten Luftausströmer bei dessen Nichtbenutzung einen Abschluß zu schaffen, der sich harmonisch in die Gestaltung des Armaturenbrettes einfügt.

Bei dem oben definierten Luftausströmer ist dazu nach der Erfindung vorgesehen, dass der Verschluß eine Abschlußplatte ist, welche zwischen einer die Zuluftströmung in den Innenraum freigebenden Offenstellung und einer Geschlossenstellung verschwenkbar ist, in welcher eine Zuluftaustrittsöffnung des Rahmens durch die Abschlußplatte mit einer Außenblende bündig abgeschlossen ist. Damit gewinnt der Luftausströmer eine harmonisch in die Form des Armaturenbrettes integrierte Gestaltung, wenn keine Zuluft benötigt wird, so daß an der Abschlußplatte nicht direkt zu erkennen ist, daß sich hinter ihr ein technisches Gerät, nämlich der Luftausströmer verbirgt.

In bevorzugter Ausgestaltung der Erfindung kann die Abschlußplatte in der Offenstellung hinter der Außenblende verborgen sein. Weiterhin ist es möglich, die Abschlußplatte nach oben oder nach unten verschwenkbar zu machen.

Eine besonders vorteilhafte Gestaltung der Erfindung sieht vor, dass die Abschlußplatte an einer Unterseite oder an einer Oberseite des im Gehäuse schwenkbar gelagerten Rahmens befestigt ist. Bei keinem Zuluftbedarf für den Innenraum des Kfzs braucht daher nur der Rahmen verschwenkt zu werden, um den Luftausströmer dem Betrachter durch die Abschlußplatte zu entziehen. Zweckmäßig weist der Verstellmechanismus eine an der Abschlußplatte bzw. dem Rahmen befestigte gehäusefeste Zugfeder auf, welche über eine einen Totpunkt aufweisende Gehäusekulisse geführt ist.

In weiterer bevorzugter Ausgestaltung der Erfindung ist vorgesehen, dass der Verschluß eine mit dem Verstellmechanismus derart antriebsgekoppelte Schließplatte aufweist, dass die Abschlußklappe erst nach Absperren der Luftströmung aus dem Luftkanal durch die Schließplatte schwenkbar ist, wobei die Schließplatte am aufstromseitigen Ende des Rahmens angeordnet ist. Eine besonders raumsparende Steuerung der Schließplatte und der Abschlußplatte wird mit einer Weiterbildung der Erfindung dahingehend erreicht, dass der Verstellmechanismus eine am Gehäuse gelagerte Steuerscheibe aufweist, deren Peripherie teilweise aus einem Außenblendenschlitz vorsteht und die mit der Abschlußplatte bzw. dem Rahmen sowie mit der Schließklappe antriebsverbunden ist.

Bevorzugte Ausführungsformen der Erfindung sind in den Unteransprüchen angegeben. Die Erfindung wird nachstehend anhand der in der beigefügten Zeichnung dargestellten Ausführungsbeispiele im Einzelnen beschrieben. Es zeigen:
- Fig 1: eine perspektivische Darstellung von Teilen eines Luftausströmers nach einer ersten Ausführungsform der Erfindung;
- Fig. 2: eine perspektivische Darstellung zweier Betriebszustände des Luftausströmers nach Fig. 1;
- Fig. 3: eine schematische perspektivische Darstellung einer weiteren Ausführungsform der Erfindung;
- Fig. 4: eine schematische perspektivische Darstellung einer dritten Ausführungsform der Erfindung, wobei sich die Abschlußplatte in Offenstellung befindet;
- Fig. 5: eine schematische perspektivische Darstellung der dritten Ausführungsform der Erfindung, bei der sich die Abschlußplatte in Geschlossenstellung befindet;
- Fig. 6 und Fig. 7: schematische Darstellung zur Erläuterung der Funktionsweise der dritten Ausführungsform.

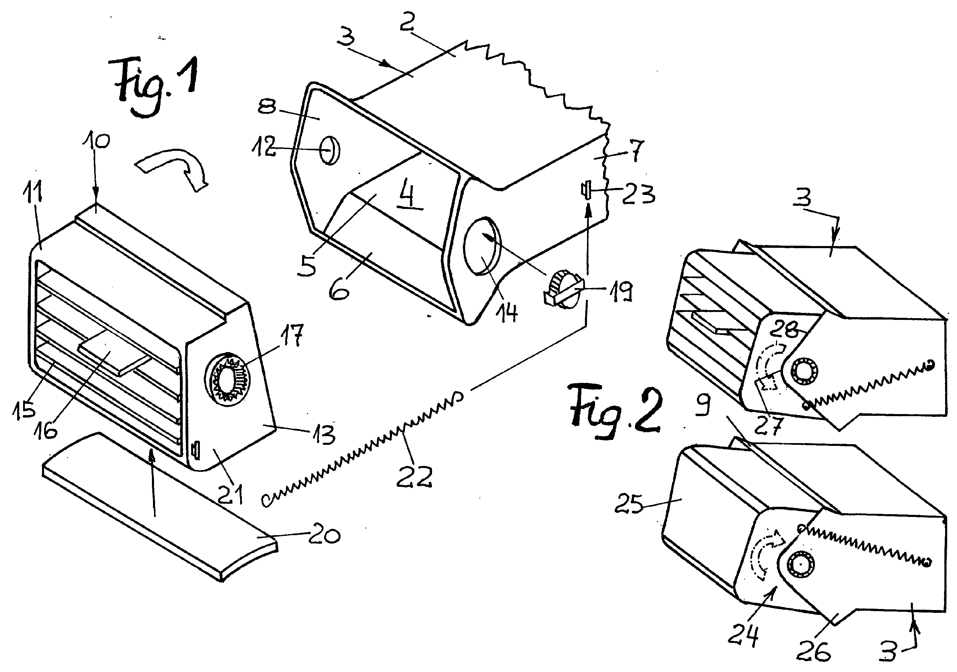

Die Fig. 1 bis 3 zeigen den vorderen Teil eines im ganzen mit 3 bezeichneten Gehäuses eines Luftausströmers, welches im Wesentlichen rechtwinkligen Querschnitt hat und einen Luftkanal 4 umschließt. Das Gehäuse 3 ist dazu bestimmt, mit seinem nicht dargestellten hinteren Ende in eine Öffnung im Armaturenbrett eines Pkws eingesetzt zu werden. An seinem vorderen Endbereich sind die Oberseite 2 sowie seine gegenüberliegende Unterseite 5 nach außen aufgebogen, so daß das Gehäuse eine schräg nach oben weisende Endfläche 9 sowie eine gegenüberliegende schräg nach unten weisende Endfläche 6 besitzt. Im Bereich der Endflächen 6, 9 sind die gegenüberliegenden Seitenwände 7, 8 des Gehäuses 3 mit fluchtenden Durchbohrungen 12, 14 versehen, in welchen ein Rahmen 10 drehbar gehalten ist.

Der Rahmen 10 hat im Wesentlichen rechteckigen Umriß und beherbergt hintereinander nicht dargestellte Vertikallamellen sowie Horizontallamellen, die mit 15 bezeichnet sind. Vertikallamellen wie auch die Horizontallamellen 15 können mittels eines aus den Horizonallamellen 15 vorstehenden Betätigungsstückes 16 so verstellt werden, dass eine aus dem Luftkanal 4 austretende Luftströmung durch die Vertikallamellen nach links oder rechts und durch die Horizontallamellen nach oben oder unten als Zuluft in das Fahrzeuginnere abgelenkt werden kann. Aus den gegenüberliegenden Seitenwänden 11, 13 des Rahmens 10 stehen fluchtende Zapfen vor, die in die Durchgangslöcher 12, 14 passen. Der die Durchgangsöffnung 14 durchdringende Zapfen 17 ist gegenüber dem gegenüberliegenden, nicht dargestellten Zapfen radial vergrößert und mit einer Innenverzahnung versehen, welche einen Stellknopf 19 unverdrehbar aufnehmen kann.

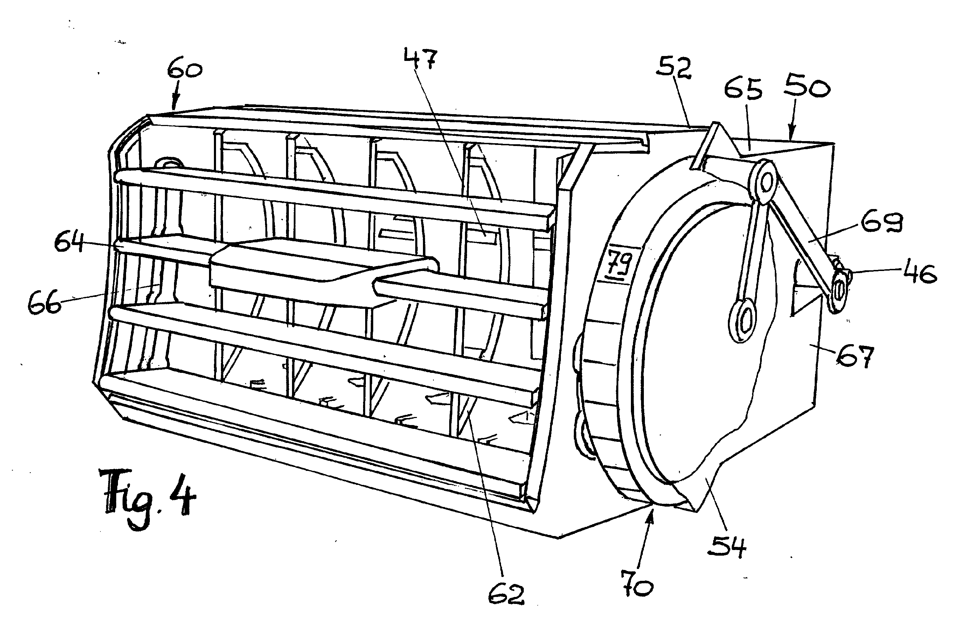

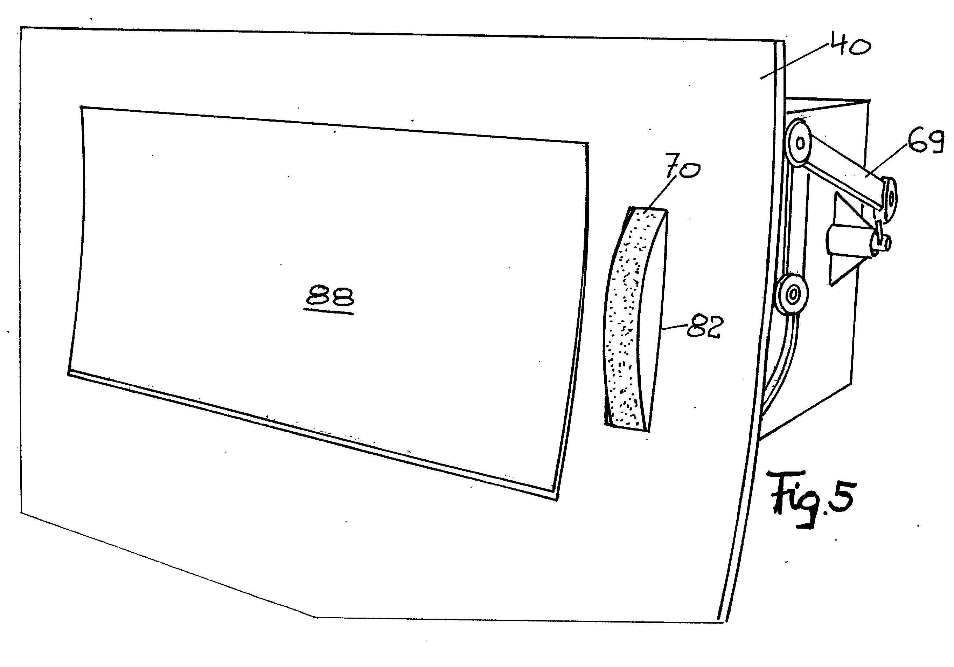

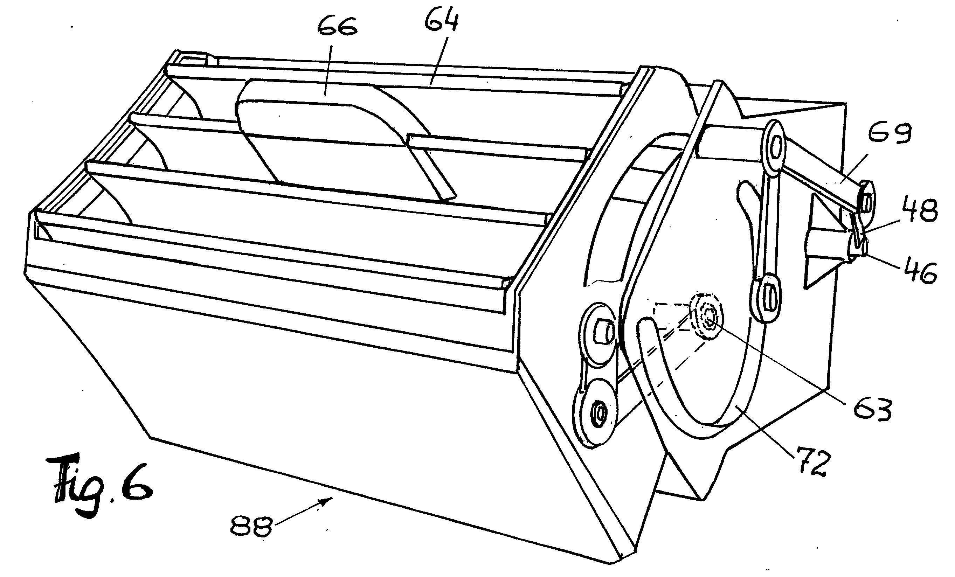

Die nicht dargestellte Unterseite des Rahmens 10 ist als eine Abschlußplatte 20 mit einer äußeren Sichtfläche 25 ausgeführt, welche der geschmacklichen Ausführung und der Form einer Außenblende 40 (Figur 5) angepaßt ist.

Aus dem vorderen unteren Teil der Seitenwand 13 steht ein Verankerungsstift 21 vor und auf der Seitenwand 8 ist ein weiterer Verankerungsstift 23 vorgesehen. Eine Zugfeder 22 ist mit ihrem vorderen Ende am Verankerungsstift 21 des Rahmens 10 und mit ihrem hinteren Ende am Verankerungsstift 23 des Gehäuses 3 festgelegt.

Der Stellknopf 19 und der radial verbreiterte Zapfen 17 sind hier auf der gleichen Seite wie die Zugfeder 22 dargestellt, um die Funktion verständlich zu machen. In der praktischen Ausführung ist die Zugfeder 22 mit zugehörigen Verankerungsstiften 21, 23 außen an der Seitenwand 7 des Gehäuses 3 und der Seitenwand 11 des Rahmens 10 angeordnet, so daß sie mit dem Stellknopf 19 nicht kollidiert..

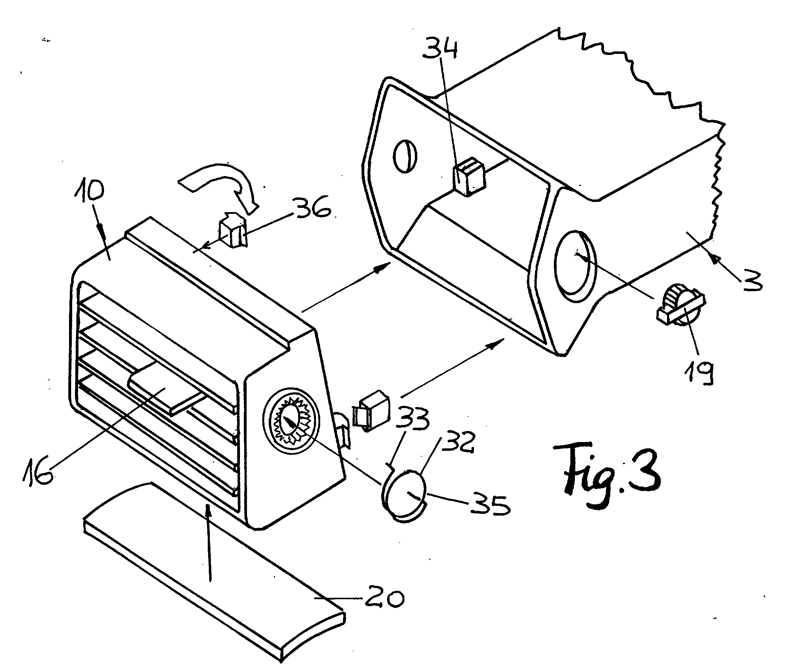

Fihur 2 zeigt den in das Gehäuse 3 eingebauten Rahmen 10 und die eingehängte Feder 22. Im oberen Teil der Figur 2 ist der Luftausströmer zum Fahrzeuginnenraum hin offen, so daß diesem Zuluft in gewünschter Menge und Richtung zugeführt werden kann. Der vordere Teil der Seitenwand 8 ist als eine Gehäusekulisse 24 ausgeführt, die einen ersten nach innen und unten weisenden Abschnitt 26 und einen nach innen und oben weisenden Abschnitt 28 sowie einen die Abschnitte 26, 28 verbindenden Über-Totpunkt-Abschnitt 27 aufweist. Der Verankerungsstift 23, die Mitte des Rahmenzapfens 18 und der Scheitelpunkt des Abschnittes 27 liegen ersichtlich auf einer gedachten Geraden. In der im oberen Teil der Figur 2 dargestellten Offenstellung des Rahmens 10 liegt der Verankerungsstift 21 an dem Abschnitt 26 an. Beim Drehen des Rahmens 10 im Gegensinn des Uhrzeigers wird die Feder 22 zunehmend gespannt, weil der Verankerungsstift 21 längs des Abschnittes 26 nach oben, sodann über den Scheitelpunkt 27 wandert und bei Entlanggleiten auf dem Abschnitt 28 der Rahmen 10 in die in Figur 2 unten dargestellte Geschlossenstellung schwenkt. In der Geschlossenstellung präsentiert sich die Außenfläche 25 der Abschlußplatte 20 dem Betrachter und läßt die Horizontallamellen 15 sowie die weiteren Bauteile des Rahmens 10 im Gehäuse 3 verschwinden. In der Geschlossenstellung liegt der Rahmen 10 an die Endfläche 9 und in der in Figur 2 unten dargestellten Offenstellung liegt der Rahmen 10 an der Endfläche 6jeweils von innen an. Die Endflächen 6 und 9 begrenzern daher den Schwenkweg des Rahmens 10.

Die Figur 3 zeigt eine der Figur 1 ähnliche Variante, bei der die spiralige Zugfeder 22 durch eine Art Haarnadelfeder 32 ersetzt ist, deren innenseitiges Ende 33 im Rahmen 10 und deren außenseitiges Ende 35 im Gehäuse 3 verankert sind. Die Feder 32 ist in das Innere des Zapfens 17 eingesetzt und wird bei eingefügtem Stellgriff 19 von diesem verdeckt.

Im übrigen weist die in Figur 3 dargestellte Variante der Ausführungsform gemäß Figuren 1 und 2 noch die Besonderheit auf, daß die Offenstellung und die Geschlossenstellung durch Anschläge definiert sind, beispielsweise durch den gehäuseseitigen Anschlag 34 und den rahmenseitigen Anschlag 36, welche durch eingebaute Magnete den Rahmen 10 in seinen beiden erwähnten Endstellungen festhalten. Im übrigen, und zwar insbesondere in der Funktionsweise, entspricht die in Figur 3 dargestellte Ausführungsform derjenigen gemäß Figuren 1 und 2, so daß auf die zugehörige Beschreibung Bezug genommen werden kann.

Die dritte Ausführungsform der Erfindung gemäß Figuren 4 bis 7 weist zunächst ein Gehäuse 50 von im wesentlichen rechteckigem Querschnitt auf, welches einen nicht näher dargestellten Luftkanal umschließt. Das Gehäuse besitzt an seinem äußeren Ende nach außen aufgebogene und gegenüberliegende Endflächen 52, 54, die ähnlich wie die Endflächen 6 und 9 als Schwenkwegbegrenzungen für einen am vorderen Ende des Gehäuses 50 gelagerten im wesentlichen rechteckigen Rahmen 60. Der Rahmen 60 enthält verstellbare Vertikallamellen, von denen ein Lamellenblatt mit 62 bezeichnet ist, sowie den Vertikallamellen vorgeschaltete Horizontallamellen, von denen ein Lamellenblatt mit dem Bezugszeichen 64 versehen ist. Ein in der Luftaustrittsöffnung des Rahmens mittig angeordneter Stellknopf 66 erlaubt die wunschgemäße Verstellung sowohl der Vertikal- wie auch der Horizontallamellen 62, 64.

Aus einem oberen endnahen Teil des Gehäuses 50 steht seitlich ein fester Träger 65 in Form eines Rohrstückes vor, der an seinem freien Ende einen zweiarmigen Winkelhebel 68 drehbeweglich trägt, dessen rahmenferner Arm 69 mit seinem rahmennahen Arm 67 ungefähr einen rechten Winkel einschließt. Der rahmennahe Arm 67 ist am freien Ende mit einem zum Rahmen weisenden Zapfen 63 versehen, welcher in einer äußeren Führungsnut 72 einer Steuerscheibe 70 eingefangen ist.

Das freie Ende des rahmenfernen Arms 69 ist über ein kleines radiales Stellglied 48 mit der Schwenkwelle 46 einer Schließplatte 47 gekoppelt, welche im hinteren Teil des Gehäuses 50, jedenfalls, von außen gesehen, hinter den Vertikallamellen 62 angeordnet ist.

Die Steuerscheibe 70 sitzt drehfest auf dem durch das Gehäuse 50 seitlich vorstehenden Ende der Schwenkwelle 55 des Rahmens 60. Bei Draufsicht auf die Führungsnut 72 hat diese in Richtung des Uhrzeigers einen vorderen Abschnitt, welcher sich spiralig der Schwenkwelle 55 nähert. Wird die Steuerscheibe 70 in Uhrzeigerrichtung, von vorne gesehen also aufwärts, gedreht, durchläuft der Zapfen 63 (auch) diesen vorderen Abschnitt mit der Folge, daß sich der Winkelhebel 68 etwa um einen rechten Winkel dreht und durch Mitnahme der Schwenkwelle 46 die Schließplatte 47 um den nämlichen Winkel von einer den Luftkanal freigebenden in eine den Luftkanal absperrende Stellung verwschwenkt. Der im Uhrzeigersinn hintere Abschnitt der Führungsnut hält über seine volle Länge gleichen Abstand zur Schwenkwelle 55.

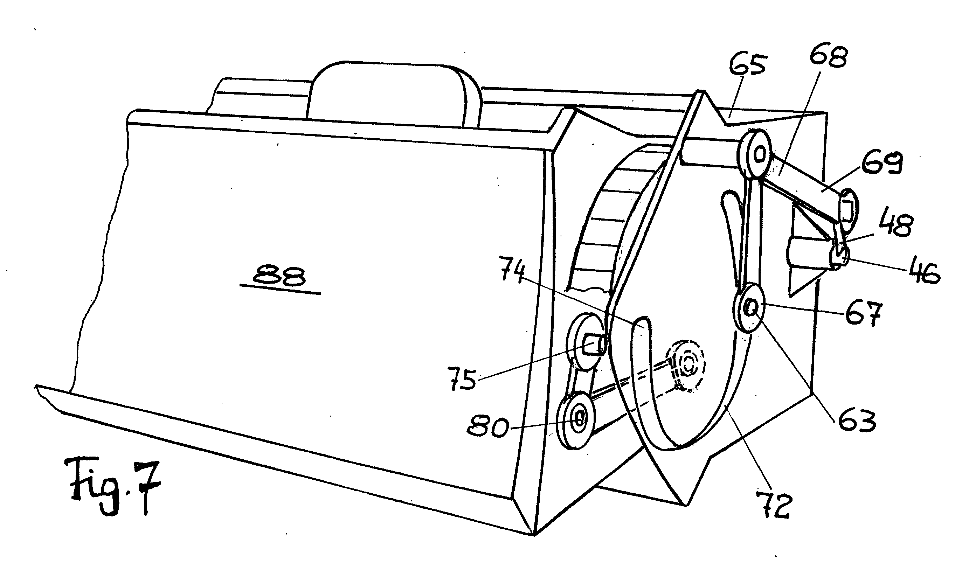

Wie Figuren 6 und 7 erkennen lassen, ist in die der Führungsnut 72 gegenüberliegende Fläche der Steuerscheibe 70 eine innere Führungsnut 74 eingelassen, in welcher der Zapfen 75 eines inneren Winkelhebels 80 eingefangen ist. Das andere freie Ende des Winkelhabels 80 ist mit einer Kurbel 85 drehbar verbunden, die auf dem Ende der Schwenkwelle 55 drehfest sitzt. Die innere Führungsnut 74 besitzt einen spiraligen Abschnitt, an den sich ein Abschnitt mit konstantem Abstand zur Schwenkachse 55 anschließt.

Man sieht leicht ein, daß die Anordnung der Führungsnuten 72, 74 relativ zueinander in Umfangsrichtung der Steuerscheibe 70 so getroffen ist, dass sich folgender Funktionsablauf einstellt: Angenommen, die Steuerscheibe 70 sei, von vorne gesehen, ganz nach unten gedreht, und zwar bis zu einem Anschlag, der durch Anlage des Zapfens 63 an die im Uhrzeigersinn vordere Begrenzung der Führungsnut 72 gegeben ist (Fig. 4). Die Schließplatte 47 ist geöffnet, der Rahmen 50 befindet sich in seiner nach vorne in das Fahrzeuginnere gerichteten Offenstellung. Von der Mantelfläche der Steuerscheibe 70 leuchten helle Segmente (eines ist mit 79 bezeichnet) dem Betrachter entgegen, die den genannten Betriebszustand symbolisieren sollen.

Wird die Steuerscheibe 70 von diesem Zustand aus nach oben, also im Uhrzeigersinn, gedreht, gleitet der Zapfen 63 durch den spiraligen vorderen Abschnitt 71 der Führungsnut 72 in Richtung auf deren hinteren Abschnitt, so daß die Schließplatte 47 etwa um einen rechten Winkel verschwenkt, der Luftkanal also geschlossen wird. Der Zapfen 75 gleitet während dieser Drehung der Steuerscheibe in einem Abschnitt der inneren Führungsnut 74, der radiuskonstant ist, der Rahmen 60 bewegt sich also nicht. Bei weiterer Drehung der Steuerscheibe 70 in der genannten Richtung gelangt der Zapfen 63 in den radiuskonstanten hinteren Teil der äußeren Führungsnut 72, so daß sich an der Stellung der Schließplatte 47 nichts ändert. Gleichzeitig gelangt der Zapfen 75 in den spiraligen Teil seiner inneren Führungsnut 74, so daß der Winkelhebel 80 die Schwenkache 55 über die Kurbel 85 soweit verdreht, daß der Rahmen 60 aus der in Figur 4 gezeigten Offenstellung in die Geschlossenstellung gemäß Figur 7 nach oben geschwenkt wird. Der Drehweg der Steuerscheibe 70 nach oben wird durch das im Uhrzeigersinn hintere Ende der äußeren Führungsnut 72 begrenzt. Man sieht aus Figur 7, dass bei Anlage des Zapfens 63 an dieser hinteren Begrenzung der äußeren Führungsnut 72 dem Betrachter die am Rahmen 60 befestigte Abschlußplatte 88 dargeboten wird, während die Öffnung des Rahmens 60 jetzt nach oben weist.

Gemäß Figur 5 ist die Sichtseite der Abschlußplatte 88 in Form und Farbe einer sie in der Geschlossenstellung des Rahmens 60 umgebenden Außenblende 40 angepaßt. Durch einen Außenblendenschlitz 82 steht ein Peripherieabschnitt der Steuerscheibe 70 nach außen zu deren Betätigung vor. Damit können im wesentlich durch nur drei Bauteile, nämlich die Steuerscheibe 70 und die beiden Winkelhebel 68 und 80, die Funktionsteile des Luftausströmers bei dessen Nichtbenutzung hinter der gefälligen Außenblende 40 verborgen werden. Entsprechend ist die Abschlußplatte 88 hinter der Außenblende 40 verborgen, wenn dem Fahrzeuginneren Zuluft durch den Luftausströmer zugeführt wird.

Die Erfindung ist auf den vorstehend beschriebenen Verstellmechanismus mit einer Steuerscheibe und zwei Winkelhebeln, die in Führungsnuten eingefangen sind, nicht beschränkt. Die beschriebenen Funktionen können auch mit Hebeln erreicht werden, die mit Röllchen ausgerüstet sind, die auf der Peripherie einer Scheibe ablaufen, wobei die Peripherie entsprechend unregelmäßig gestaltet ist. Ferner kommen Getriebe mit mehreren Ritzeln in Betracht, die abschnittsweise kämmen.

## Patentansprüche

1. Luftausströmer für die Belüftung des Innenraumes eines Kraftfahrzeuges mit einem von einem Gehäuse umschlossenen Luftkanal, an dessen Luftaustrittsende ein Verschluß in dem Gehäuse durch einen Verstellmechanismus verschwenkbar angeordnet ist, sowie mit einem Rahmen, der im Gehäuse am Luftaustrittsende gehalten ist und in welchem verstellbare Lamellen befestigt sind, die der Zuluft in den Innenraum eine gewünschte Vorzugsrichtung aufprägen, **dadurch gekennzeichnet, daß** der Verschluß eine Abschlußplatte (20; 88) ist, welche zwischen einer die Zuluftströmung in den Innenraum freigebenden Offenstellung und einer Geschlossenstellung verschwenkbar ist, in welcher eine Zuluftaustrittsöffnung des Rahmens (10; 60) mit einer Außenblende (40) bündig abgeschlossen ist.

2. Luftausströmer nach Anspruch 1, **dadurch gekennzeichnet, daß** die Abschlußplatte in der Offenstellung hinter der Außenblende (40) verborgen ist.

3. Luftausströmer nach Anspruch 1 oder 2, **dadurch gekennzeichnet, daß** die Abschlußplatte (20; 88) nach oben oder unten verschwenkbar ist.

4. Luftausströmer nach einem der vorstehenden Ansprüche, **dadurch gekennzeichnet, daß** die Abschlußplatte (20; 88) an einer Unterseite des im Gehäuse schwenkbar gelagerten Rahmens (10; 60) befestigt ist.

5. Luftausströmer nach einem der Ansprüche 1 bis 3, **dadurch gekennzeichnet, daß** die Abschlußplatte an einer Oberseite des im Gehäuse schwenkbar gelagerten Rahmens befestigt ist.

6. Luftausstrlömer nach einem der vorstehenden Ansprüche, **dadurch gekennzeichnet, daß** der Verstellmechanismus wenigstens eine an der Abschlußplatte bzw. dem Rahmen befestigte gehäusefeste Zugfeder (22) aufweist, welche über eine einen Totpunkt (27) aufweisende Gehäusekulisse (24) geführt ist.

7. Luftausströmer nach einem der vorstehenden Ansprüche, **dadurch gekennzeichnet, daß** der Verschluß eine mit dem Verstellmechanismus derart antriebsgekoppelte Schließplatte (47) aufweist, daß die Abschlußplatte (88) erst nach Absperren der Luftströmung aus dem Luftkanal durch die Schließplatte (47) schwenkbar ist, wobei die Schließplatte am aufstromseitigen Ende des Rahmens (60) angeordnet ist.

8. Luftausströmer nach Anspruch 7, **dadurch gekennzeichnet, daß** der Verstellmechanismus eine am Gehäuse gelagerte Steuerscheibe (70) aufweist, deren Peripherie teilweise aus einem Außenblendenschlitz (82) vorsteht und die mit der Abschlußplatte (88) bzw. dem Rahmen (60) sowie mit der Schließklappe (47) antriebsverbunden ist.

9. Luftausströmer nach Anspruch 8, **dadurch gekennzeichnet, daß** die Steuerscheibe mit einer Schwenkwelle (55) des Rahmens (60) drehfest verbunden ist und Führungsschlitze (72, 74) für Winkelhebel (68, 80) aufweist, von denen einer mit der Schwenkwelle (55) des Rahmens (60) und der andere mit der Schwenkachse (46) der Schließklappe (47) gekoppelt ist.

10. Luftausströmer nach Anspruch 8 oder 9, **dadurch gekennzeichnet, daß** der Verstellmechanismus derart mit der Steuerscheibe (70) gekoppelt ist, daß zum Schließen zunächst die Schließklappe (47) und sodann der Rahmen (60) geschlossen sind.
